# EUROPÄISCHE PATENTSCHRIFT

(11) **EP 1 297 370 B1**
(45) Veröffentlichungstag und Bekanntmachung des Hinweises auf die Patenterteilung: **03.05.2006**
(21) Anmeldenummer: 01945218.4
(22) Anmeldetag: 31.05.2001
(51) Int. Cl.: G02B 6/02, C03B 37/027

(54) **LICHTWELLENLEITER AUF QUARZGLASBASIS UND VERFAHREN ZU SEINER HERSTELLUNG**
OPTICAL WAVEGUIDE BASED ON QUARTZ GLASS AND METHOD FOR THE PRODUCTION THEREOF
GUIDE D'ONDES OPTIQUES A BASE DE VERRE DE QUARTZ ET SON PROCEDE DE FABRICATION

(30) Priorität: 20.06.2000 DE 10030264
(43) Veröffentlichungstag der Anmeldung: 02.04.2003
(73) Patentinhaber: Deutsche Telekom AG, 53113 Bonn (DE)
(72) Erfinder: DULTZ, Wolfgang, 65936 Frankfurt/M. (DE); HEITMANN, Walter, 64401 Gross-Bieberau (DE); KLEIN, Karl-Friedrich, 61169 Friedberg (DE)
(74) Vertreter: Mierswa, Klaus
(86) Internationale Anmeldenummer: PCT/EP2001/006172
(87) Internationale Veröffentlichungsnummer: WO 2001/098804

(56) Entgegenhaltungen:
- WO-A-98/01776
- US-A- 4 802 733
- US-A- 5 483 613
- PATENT ABSTRACTS OF JAPAN vol. 014, no. 363 (C-0746), 7. August 1990 (1990-08-07) & JP 02 133333 A (FUJIKURA LTD), 22. Mai 1990 (1990-05-22)

## Beschreibung

### Technisches Gebiet:

Die vorliegende Erfindung betrifft einen Lichtwellenleiter (optische Faser) auf Quarzglasbasis, wobei der Kern und/oder der Mantel des Lichtwellenleiters mit einem oder mehreren Fremdstoffen dotiert sind, und ein Verfahren zur Herstellung des Lichtwellenleiters.

### Stand der Technik:

Lichtwellenleiter (optische Fasern) auf Quarzglasbasis werden heute in großem Umfang in optischen Übertragungsnetzen eingesetzt. Wichtigster Fasertyp ist die Einmodenfaser (Monomodefaser) mit einem Kerndurchmesser von typischerweise ca. 8 bis 9 µm und einem Manteldurchmesser von typischerweise ca. 125 µm. Einmodenfasern zeichnen sich durch geringe Dämpfung und Dispersion aus, d.h. mit diesen Fasern können Nachrichten und Daten mit geringen Verlusten und großen Bandbreiten übertragen werden.

Eine Verringerung der Dämpfung ist bei der Übertragung von Information mittels Lichtwellenleiteren mit einer Verringerung der Übertragungsverluste und einem Gewinn an nutzbarer Bandbreite und daher mit erheblichen wirtschaftlichen Vorteilen verbunden, insbesondere dann, wenn optische Fernnetze oder Seekabel betroffen sind.

Die bisher niedrigste Dämpfung wurde bei Einmodenfasern mit reinem (d.h. mit einem nicht dotierten) Quarzglaskern und einem mit Fluor dotierten Quarzglasmantel erreicht. Die Firma Sumitomo /Japan liefert Fasern dieses Typs, die im Wellenlängenbereich von 1,55 bis 1,58 µm einen minimalen Dämpfungskoeffizienten von 0,17 dB/km aufweisen.

1986 stellte die Firma Sumitomo eine Faser mit einem Dämpfungskoeffizienten von 0,154 dB/km bei einer Wellenlänge von 1,55 µm her. Dieser Wert konnte allerdings bis heute nicht reproduziert werden. Details dazu sind von H. Kanamori et al. in "Transmission Characteristics and Reliability of Pure-Silica-Core Single-Mode Fibers", Journal of Lightwave Technology, Vol. LT-4, No. 8, August 1986, S. 1144-1150, veröffentlicht worden.

Theoretische Überlegungen und Berechnungen von M.E. Lines et al., die in "Calcium Aluminate Glasses as potential Ultralow-Loss Optical Materials", Journal of Non-Crystalline Solids 107 (1989), S. 251-260, veröffentlicht wurden, haben als minimalen Dämpfungskoeffizienten für reines Quarzglas einen Wert von 0,145 dB/Km ergeben.

Auf Grund dieser Übereinstimmung von Theorie und Praxis wird es im Stand der Technik als gesichert angesehen, daß eine Verringerung der Dämpfung von Einmodenfasern auf Werte wesentlich unter 0,15 dB/km nicht möglich ist.

Eine Überprüfung der in der letztgenannten Veröffentlichung angegebenen Daten ergab jedoch, daß an massivem Quarzglas ein Dämpfungskoeffizient von 9,2 dB/km bei einer Wellenlänge von 0,514 µm gemessen wurde. Eine Umrechnung dieses Wertes auf den Dämpfungskoeffizienten bei 1,55 µm ergibt einen Wert, der erheblich unter 0,15 dB/km liegt.

In guter Übereinstimmung hiermit stehen frühere Berechnungen von M.E. Lines, veröffentlicht in "Scattering losses in optic fiber materials. II Numerical estimates", Journal of Applied Physics, Vol. 55, No. 11, Juni 1984, S. 4058-4063, in denen für den minimalen Dämpfungskoeffizienten von reinem Quarzglas bei einer Wellenlänge 1,55 µm ein Wert von nur 0,10 dB/km ermittelt wurde.

Die beiden letztgenannten Ergebnisse legen nahe, daß die erreichbare, physikalische Untergrenze der Dämpfung (intrinsische Grenze) wesentlich unterhalb von 0,15 dB/km liegt.

Dies wird durch einen gemessenen Wert an einer Multimode-Stufenindexfaser mit reinem Quarzglaskern und F-dotiertem Mantel bestätigt. Nach einer Messung von H. Bauch und V. Paquet, veröffentlicht in "Fibers with Pure SiO₂-Core Made by PICVD", Journal of Optical Communications 8 (1987) 4, S. 136-139, wurde nämlich bei einer Wellenlänge von 0,5 µm ein Dämpfungskoeffizient von 9.4 dB/km gefunden.

Umgerechnet auf eine Wellenlänge von 1,55 µm und mit der Addition eines Absorptionsverlustes von 0,02 dB/km (entnommen aus der bereits oben zitierten Veröffentlichung von M.E. Lines et al. in "Calcium Aluminate Glasses as potential Ultralow-Loss optical Materials", Journal of Non-Crystalline Solids 107 (1989), S. 251-260) ergibt sich aus dem Ergebnis von H. Bauch und V. Paquet ein Dämpfungskoeffizient von 0,11 dB/km.

Bei dieser Abschätzung sind Zusatzverluste z.B. durch die höheren Moden nicht berücksichtigt worden.

Diese Werte stehen in deutlichem Widerspruch zu dem im Stand der Technik akzeptierten Minimalwert von ca. 0,15 dB/km. Man kann also davon ausgehen, daß die physikalisch mögliche Untergrenze des Dämpfungskoeffizienten von Einmodenfasern mit einem reinen Quarzglaskern bei einer Wellenlänge von 1,55 µm nicht, wie im Stand der Technik angenommen, im Bereich von 0,15 dB/km, sondern vielmehr im Bereich zwischen 0,10 - 0,11 dB/km und damit wesentlich unterhalb von 0,15 dB/km liegt.

Als Grund dafür, daß der bei einer Wellenlänge von 1,55 µm erzielte Minimalwert von 0,154 dB/km in der Praxis bisher dennoch nicht unterboten werden konnte, kommen hauptsächlich die inneren mechanischen Spannungen in Betracht, die innerhalb der Fasern bei deren Herstellung insbesondere an der Kern-Mantel-Grenzfläche entstehen.

Im folgenden wird daher der Herstellungsprozeß handelsüblicher Lichtwellenleiter kurz erläutert.

Aufgrund des Funktionsprinzips von Lichtwellenleitern ist es erforderlich, daß das Kernmaterial eine höhere Brechzahl aufweist als das Mantelmaterial. Dieser Unterschied der Brechzahlen wird üblicherweise durch eine Germaniumdioxid (GeO₂)-Dotierung des Kernmaterials oder eine Fluor-Dotierung des Mantelmaterials erreicht. Mit einer herkömmlichen, dem Stand der Technik entsprechenden Dotierung ist jedoch mit dieser zugleich eine Änderung des linearen thermischen Ausdehnungskoeffizienten verbunden.

Kern- und Mantelmaterial weisen daher unterschiedliche, stark durch die Dotierung beeinflußte lineare thermische Ausdehnungskoeffizienten auf. Bei Einmodenfasern mit reinem Quarzglaskern wird die Fluor-Dotierung des Mantels üblicherweise so gewählt, daß sich die Brechzahl gegenüber undotiertem Quarzglas um etwa 0,4% verringert. Der Ausdehnungskoeffizient des undotierten Kerns beträgt ca. 5...6 *10⁻⁷/°C, für den dotierten Mantel ergeben sich etwa 3.10 - 7/°C, wie der Veröffentlichtung "Möglichkeiten und Grenzen des PCVD-Verfahrens zur Herstellung von Lichtleitfasern (Abschlußbericht)", Fördervorhaben des BMFT, Kennzeichen 412-7491-TKo255/9, Berichtszeitraum 1/84-12/86, von H. Lydtin et al. zu entnehmen ist.

Bei der Herstellung des Lichtwellenleiters wird die Schmelze in der Ziehzwiebel am Ende der Vorform zum Ausziehen der Faser wird auf ca. 2000 °C erhitzt. Beim Aufwickeln auf die Ziehtrommel hat sich die Faser dann auf Raumtemperatur abgekühlt, d.h., der Lichtwellenleiter ist während seines Herstellungsprozesses einer starken Abkühlung unterworfen.

Bei etwa 1000 °C werden Kern- und Mantelmaterial so zäh, daß sich die wegen der unterschiedlichen Ausdehnungskoeffizienten von Mantel und Kern entstehenden Spannungen nicht mehr ausgleichen oder abbauen können und sich beim weiteren Abkühlen im Inneren des Lichwellenleiters ein steiler Spannungsgradient in Kern/Mantel-Grenzbereich ausbildet.

Eine wesentliche Ursache für das Entstehen der innerhalb des Lichtwellenleiters vorliegenden mechanischen Spannungen resultiert demnach aus der im Zuge seiner Herstellung erfolgenden Abkühlung.

Eine weitere Quelle für die Entstehung von mechanischen Spannungen innerhalb des Lichtwellenleiters stellt der Ziehprozeß dar, dem der Lichtwellenleiter bei seiner Herstellung unterworfen ist. Die Beträge der hierdurch innerhalb des Lichtwellenleiters verursachten mechanischen Spannungen können in einer ähnlichen Größenordnung liegen wie diejenigen, die aufgrund der Abkühlung entstehen.

Diese Spannungen können nach Untersuchungen von G.R. Atkins et al., veröffentlicht in "Defects in Optical Fibres in Regions of High Stress Gradients'', Electronics Letters Vol. 27, No. 16 (1991), S. 1432-1433, so groß werden, daß Bindungen zwischen den Atomen im Glasnetzwerk aufbrechen.

Aufgrund dieser Spannungen entstehen im Inneren des Lichtwellenleiters z.B. Inhomogenitäten, Brechzahlgradienten und Streuzentren, durch welche der Dämpfungskoeffizient vergrößert wird. Messungen von Spannungen in Vorformscheiben haben ergeben, daß der Bereich des steilen Spannungsgradienten bei Einmodenfasern etwa 60% des Kernquerschnitts beträgt. In diesem Bereich, der etwa symmetrisch zur Kern/Mantel-Grenzfläche liegt, fließt ein beträchtlicher Anteil der von der Einmodenfaser transportierten Lichtleistung. Dies bedeutet, daß die mechanischen Spannungen im Inneren von Einmodenfasern einen erheblichen nachteiligen Einfluß auf die integrale Dämpfung ausüben können.

Des Weiteren verursachen mechanische Spannungen im Inneren des Lichtwellenleiters neben einer Erhöhung der Dämpfung auch eine Doppelbrechung und damit eine Vergrößerung der Polarisationsmodendispersion (PMD). Erhöhte PMD-Werte führen jedoch nachteilhafterweise zu einer Verringerung der Übertragungsbandbreite bei hohen Bitraten.

Der Erfindung liegt daher die Aufgabe zu Grunde, einen Lichtwellenleiter mit verringerten inneren mechanischen Spannungen bereitzustellen.

Diese Aufgabe wird erfindungsgemäß gelöst durch einen Lichtwellenleiter mit einem Kern und einem Mantel jeweils aus Quarzglas, dadurch gekennzeichnet, daß
a) die Differenz der linearen thermischen Ausdehnungskoeffizienten von Kern- und Mantelmaterial mittels entsprechender Dotierung des Kern- und/oder Mantelmaterials durch mindestens einen Fremdstoff so gewählt ist, daß die durch den Herstellungsprozeß im Lichtwellenleiter hervorgerufenen inneren mechanischen Spannungen verringert sind,
b) das Kern- und/oder Mantelmaterial mittels mindestens einem ersten und einem zweiten Fremdstoff so dotiert ist/sind, daß das durch eine Dotierung mit dem ersten Fremdstoff hervorgerufene Verhältnis der Änderung der Brechzahl zur Änderung des linearen thermischen Ausdehnungskoeffizienten, von dem durch eine Dotierung mit dem zweiten Fremdstoff hervorgerufenen Verhältnis der Änderung der Brechzahl zur Änderung des linearen thermischen Ausdehnungskoeffizienten verschieden ist,
c) als Potierstoffe für das Mantelmaterial Fluor und GeO₂ verwendet werden, und
d) als Dotierstoffe für das Mantelmaterial Fluor und GeO₂ in solchen Konzentrationen verwendet werden, daß zum Zwecke des Erreichens einer Brechzahldifferenz zwischen Kern- und Mantelmaterial von 0,4% bei gleichen linearen thermischen Ausdehnungskoeffinzienten für Kern- und Mantelmaterial die Brechzahl des Mantelmaterials gegenüber reinem Quarzglas allein durch die Fluor-Dotierung um 0,6% verringert und durch die zusätzliche Dotierung mit Germaniumdioxid (GeO₂) um 0,2% erhöht ist, so daß die Brechzahl des Mantelmaterials insgesamt um 0,4% geringer ist als diejenige des Kernmaterials.

Ein Verfahren zur Herstellung eines Lichtwellenleiters mit einem Kern und einem Mantel jeweils aus Quarzglas unter Abkühlen und Ziehen einer Faser aus einer Schmelze ist dadurch gekennzeichnet, daß
a) die Differenz der linearen thermischen Ausdehnungskoeffizienten von Kern- und Mantelmaterial mittels entsprechender Dotierung des Kern- und/oder Mantelmaterials durch mindestens einen Fremdstoff so gewählt ist, daß die durch das Abkühlen und/oder Ziehen und/oder sonstigen durch den Herstellungsprozeß im Lichtwellenleiter hervorgerufenen inneren mechanischen Spannungen verringert sind,
b) das Kern- und/oder Mantelmaterial mittels mindestens einem ersten und einem zweiten Fremdstoff so dotiert ist/sind, daß das durch eine Dotierung mit dem ersten Fremdstoff hervorgerufene Verhältnis der Änderung der Brechzahl zur Änderung des linearen thermischen Ausdehnungskoeffizienten, von dem durch eine Dotierung mit dem zweiten Fremdstoff hervorgerufenen Verhältnis der Änderung der Brechzahl zur Änderung des linearen thermischen Ausdehnungskoeffizienten verschieden ist
c) als Dotierstoffe für das Mantelmaterial Fluor und GeO₂ verwendet werden, und
d) als Dotierstoffe für das Mantelmaterial Fluor und GeO₂ in solchen Konzentrationen verwendet werden, daß zum Zwecke des Erreichens einer Brechzahldifferenz zwischen Kern- und Mantelmaterial von 0,4% bei gleichen linearen thermischen Ausdehnungskoeffinzienten für Kern- und Mantelmaterial die Brechzahl des Mantelmaterials gegenüber reinem Quarzglas allein durch die Fluor-Dotierung um 0,6% verringert und durch die zusätzliche Dotierung mit Germaniumdioxid (GeO₂) um 0,2% erhöht ist, so daß die Brechzahl des Mantelmaterials insgesamt um 0,4% geringer ist als diejenige des Kernmaterials.

Erfindungsgemäß kann eine geeignete Dotierung des Mantelmaterials oder sowohl des Mantel- als auch des Kernmaterials erfolgen. Wie bereits oben erläutert, werden durch eine Dotierung zugleich sowohl die Brechzahl als auch der lineare thermische Ausdehnungskoeffiziert von Quarzglas beeinflußt. Erfindungsgemäß werden durch eine geeignete Dotierung von Kern- und/oder Mantelmaterial sowohl die Differenz der Brechzahlen als auch die Differenz der linearen thermischen Ausdehnungskoeffizienten von Kern- und/oder Mantelmaterial gezielt auf jeweils bestimmte Werte gebracht.

### Brechzahldifferenz:

Erfindungsgemäß sind einerseits entweder das Mantelmaterial oder beide in einer solchen Weise mit einem oder mehreren geeigneten Fremdstoffen dotiert, daß die Brechzahl des Kernmaterials um den gewünschten Betrag höher ist als diejenige des Mantelmaterials. Insbesondere kann die Dotierung des Kern- und/oder Mantelmaterials in Abhängigkeit von der Art des Lichtwellenleiters vorteilhaft so gewählt sein, daß die Brechzahldifferenz zwischen Kern- und Mantelmaterial gegenüber einem herkömmlichen Lichtwellenleiter gleicher Art nicht verändert ist

Wenn der Lichtwellenleiter eine Standard-Einmodenfaser ist, kann daher die Dotierung des Kern- und/oder Mantelmaterials insbesondere so gewählt sein, daß die Brechzahl des Mantelmaterials, ebenso wie bei herkömmlichen Standard-Einmodenfasern, um 0,4% geringer ist als diejenige des Kernmaterials.

### Differenz der linearen thermischen Ausdehnungskoeffizienten:

Andererseits werden erfindungsgemäß des Weiteren durch die Dotierung des Mantel- und/oder Kernmaterials die linearen thermischen Ausdehnungskoeffizienten von Mantel und/oder Kern und damit insbesondere auch deren Differenz gezielt so beeinflußt, daß die durch den Herstellungsprozeß im Inneren des Lichtwellenleiters entstehenden mechanischen Spannungen verringert werden.

In der Erfindung sind die Dotierungen so gewählt, daß die linearen thermischen Ausdehnungskoeffizienten von Mantel und Kern gleich groß sind, also deren Differenz verschwindet. In diesem Fall entstehen bei der mit der Herstellung des Lichtwellenleiters verbundenen Abkühlung in diesem keine oder nur sehr geringfügige mechanischen Spannungen. Die durch den mit der Herstellung verbundenen Ziehprozeß verursachten Spannungen sind in dieser Ausführungsform der Erfindung jedoch nicht vermindert. Die resultierenden Gesamtspannungen im Inneren des lichtwellenleiters sind jedoch erfindungsgemäß verringert.

Die niedrige Dämpfung eines erfindungsgemäßen Lichtwellenleiters führt auch in dem bisher hauptsächlich in optischen Netzen genutzten Wellenlängenbereich um 1,3 µm zu einer deutlichen Senkung des Dämpfungskoeffizienten, Bisher produzierte hochwertige Einmodenfasern weisen bei einer Wellenlänge von 1,3 µm einen Dämpfungskoeffizienten von etwa 0,34 dB/km auf. Dieser Wert kann mittels eines erfindungsgemäßen Lichtwellenleiters auf ca. die Hälfte reduziert werden.

Die Entwicklung der optischen Nachrichtentechnik wird durch einen ständig wachsenden Bedarf an Übertragungsbandbreite charakterisiert. In den optischen Netzen werden zunehmend mehrere Wellenlängen parallel zur Übertragung eingesetzt. Diese Technik wird als WDM (Wavelength Division Multiplexing) bzw. DWDM (Dense WDM) bezeichnet. Für die maximal übertragbare Bandbreite ist der verfügbare Spektralbereich mit niedriger Dämpfung ein wichtiges Kriterium. Mit einem erfindungsgemäßen Lichtwellenleiter in Einmoden-Ausführung läßt sich bei einer OH-Zusatzabsorption von unter 0,1 dB/km zwischen 1,25 µm und 1,65 µm ein 400 nm breiter Wellenlängenbereich realisieren, in dem der Dämpfungskoeffizient unter 0,3 dB/km liegt. Bei einem Abstand der einzelnen Übertragungskanäle von 0,4 nm (DWDM) können somit 1000 Wellenlängen gleichzeitig mit sehr geringen Verlusten übertragen werden.

Eine erfindungsgemäße Einmodenfaser ist aufgrund der verringerten inneren mechanischen Spannungen auch in Bezug auf die PMD-Werte herkömmlichen Einmodenfasern überlegen.

Gemäß der Erfindung ist/sind das Kern- und/oder Mantelmaterial mittels mindestens einem ersten und einem zweiten Fremdstoff so dotiert, daß das durch eine Dotierung mit dem ersten Fremdstoff hervorgerufene Verhältnis der Änderung der Brechzahl zur Änderung des linearen thermischen Ausdehnungskoeffizienten, von dem durch eine Dotierung mit dem zweiten Fremdstoff hervorgerufenen Verhältnis der Änderung der Brechzahl zur Änderung des linearen thermischen Ausdehnungskoeffizienten verschieden ist.

Außerdem ist/sind das Kern- und/oder Mantelmaterial mittels mindestens einem ersten und einem zweiten Fremdstoff so dotiert, daß die durch eine Dotierung mit dem ersten Fremdstoff hervorgerufene Änderung der Brechzahl zu der durch eine Dotierung mit dem zweiten Fremdstoff hervorgerufenen Änderung der Brechzahl gegenläufig ist.

In einer wiederum anderen Ausgestaltung dieser Ausführungsform ist/sind das Kern- und/oder Mantelmaterial mittels mindestens einem ersten und einem zweiten Fremdstoff so dotiert, daß die durch eine Dotierung mit dem ersten Fremdstoff hervorgerufene Änderung des linearen thermischen Ausdehnungskoeffizienten zu der durch eine Dotierung mit dem zweiten Fremdstoff hervorgerufenen Änderung des linearen thermischen Ausdehnungskoeffizienten gegenläufig ist.

Gemäß der Erfindung sind die Fremdstoffe zur Dotierung des Kerns und/oder Mantels Fluor (F) und Germaniumdioxid (GeO₂). Die Wirkungsweise einer solchen Doppeldotierung wird im folgenden erläutert.

Bei einer Fluor-Dotierung verringern sich sowohl die Brechzahl als auch der lineare thermische Ausdehnungskoeffizient, wobei deren jeweilige Verringerungen in einem bestimmten zahlenmäßigen Verhältnis X₁ stehen.

Bei einer Germaniumdioxid-Dotierung hingegen steigen sowohl die Brechzahl als auch der lineare thermische Ausdehnungskoeffizient an. Das Zahlenverhältnis X₂ dieser beiden Anstiege ist jedoch von X₁ verschieden. D.h., die Wirkungen der beiden Dotierungen auf die Parameter Brechzahl und Ausdehnungskoeffizient können einander trotz ihrer Gegenläufigkeit nicht für beide Parameter gleichzeitig aufheben, sondern die Gegenläufigkeit wirkt sich auf die Brechzahl und auf den linearen thermischen Ausdehnungskoeffizienten in unterschiedlichem Ausmaße aus und kann nur zur Aufhebung der Wirkung auf einen von beiden Parametern führen, während der andere Parameter durch die Doppeldotiertung verändert bleibt. Für eine Velzahl von linearen thermischen Ausdehnungskoeffizienten kann somit ein- und dieselbe Brechzahl erreicht werden und umgekehrt.

Daher können durch jeweils geeignete Wahl der Konzentrationen der Fluor-Dotierung und Germaniumdioxid-Dotierung in weiten Grenzen beliebige Werte sowohl für die Brechzahl als auch gleichzeitig für den linearen thermischen Ausdehnungskoeffizienten realisiert werden.

In einer bevorzugten Ausführungsform der Erfindung ist das Quarzglas des Kerns des Lichtwellenleiters undotiert und das Quarzglas des Mantels zugleich mit den Fremdstoffen Fluor (F) und Germaniumdioxid (GeO₂) dotiert.

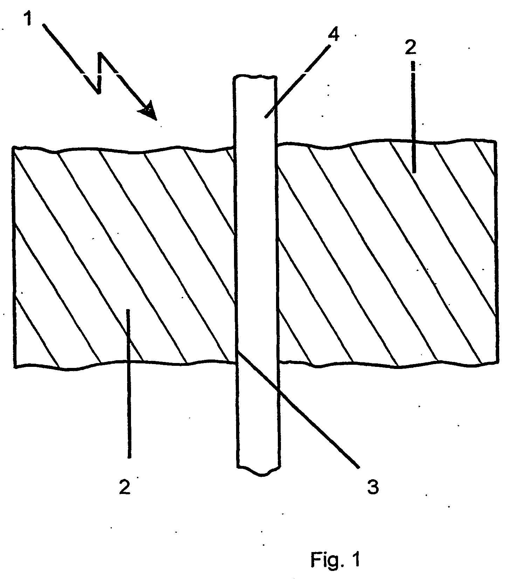

Fig. 1 zeigt zur Veranschaulichung einer bevorzugten Ausführungsform der Erfindung eine Querschnittdarstellung eines vergrößerten Abschnittes eines erfindungsgemäßen Einmoden-Lichtwellenleiters 1.

Der Lichtwellenleiter 1 umfaßt einen dotierten Quarzglas-Mantel 2 und einen undotierten Quarzglas-Kern 4. Der Mantel 2 und der Kern 4 grenzen in einem Grenzbereich 3 aneinander.

Der Ausdehnungskoeffizient des Kerns 4 beträgt aufgrund der Materialeigenschaften von reinem Quarzglas ca. 5...6 *10⁻⁷/°C. Der Mantel wird gemäß der Erfindung mit zwei Fremdstoffen dotiert, nämlich mit Fluor (F) und Germaniumdioxid (GeO₂).

Die Dotierung des Mantels 2 mit Fluor ist hierbei so gewählt, daß die Brechzahl des Mantelmaterials gegenüber reinem Quarzglas allein durch die Fluor-Dotierung um 0,6% verringert ist. Aufgrund einer solchen Dotierung sinkt der Ausdehnungskoeffizient des Mantelmaterials auf 2*10 ⁻⁷/°C, wie der Veröffentlichung "Möglichkeiten und Grenzen des PCVD-Verfahrens zur Herstellung von Lichtleitfasem (Abschlußbericht)", Fördervorhaben des BMFT, Kennzeichen 412-7491-TK0255/9. Berichtszeitraum 1/84-12/86 von H. Lydtin et al. zu entnehmen ist

Die zusätzliche Dotierung mit Germaniumdioxid (GeO₂) ist in einer solchen Konzentration gewählt, daß hierdurch eine Brechzahlerhöhung um 0.2% bewirkt wird, so daß die Brechzahl des Mantelmaterials insgesamt um 0,4% geringer ist als diejenige des Kernmaterials, was für viele Anwendungen von Einmodenfasern gefordert ist und einen Standardwert für viele handelsübliche Einmoden-Lichtwellenleiter darstellt.

Der Ausdehnungskoeffizient des Mantelmaterials steigt jedoch auf Grund dieser zusätzlichen Dotierung auf den Wert für reines Quarzglas und damit wieder auf den Wert des Kernmaterials an (auch diese Daten wurden der oben erwähnten Veröffentlichung von H. Lydtin et al. entnommen).

In diesem Fall entstehen bei der mit der Herstellung des Lichtwellenleiters 1 verbundenen Abkühlung in diesem keine mechanischen Spannungen. Die bei der Herstellung insgesamt entstehenden mechanischen Spannungen im Inneren des Lichtwellenleiters 1 sind somit erfindungsgemäß verringert.

Damit ist gemäß der Erfindung ein Typ von Lichtwellenleiter mit der gleichen Brechzahldifferenz wie bei üblichen Einmodenfasern und gleichen Ausdehnungskoeffizienten von Kern- und Mantelmaterial realisiert.

### Gewerbliche Anwendbarkeit:

Die Erfindung ist gewerblich anwendbar insbesondere auf dem Gebiet der Übertragung von Signalen und Information über Lichtwellenleiter, die z.B. in optischen Übertragungsnetzen oder Seekabeln zum Einsatz kommen.

### Liste der Bezugszeichen:

- 1: Lichtwellenleiter
- 2: Mantel
- 3: Grenzbereich zwischen Mantel und Kern
- 4: Kern

## Patentansprüche

1. Lichtwellenleiter mit einem Kern und einem Mantel jeweils aus Quarzglas,
**dadurch gekennzeichnet, daß**
a) die Differenz der linearen thermischen Ausdehnungskoeffizienten von Kern- und Mantelmaterial mittels entsprechender Dotierung des Kern- und/oder Mantelmaterials durch mindestens einen Fremdstoff so gewählt ist, daß die durch den Herstellungsprozeß im Lichtwellenleiter (1) hervorgerufenen inneren mechanischen Spannungen verringert sind,
b) das Kern- und/oder Mantelmaterial mittels mindestens einem ersten und einem zweiten Fremdstoff so dotiert ist/sind, daß das durch eine Dotierung mit dem ersten Fremdstoff hervorgerufene Verhältnis der Änderung der Brechzahl zur Änderung des linearen thermischen Ausdehnungskoeffizienten, von dem durch eine Dotierung mit dem zweiten Fremdstoff hervorgerufenen Verhältnis der Änderung der Brechzahl zur Änderung des linearen thermischen Ausdehnungskoeffizienten verschieden ist,
c) als Dotierstoffe für das Mantelmaterial Fluor und GeO₂ verwendet werden, und
d) als Dotierstoffe für das Mantelmaterial Fluor und GeO₂ in solchen Konzentrationen verwendet werden, daß zum Zwecke des Erreichens einer Brechzahldifferenz zwischen Kern- und Mantelmaterial von 0,4% bei gleichen linearen thermischen Ausdehnungskoeffinzienten für Kern- und Mantelmaterial die Brechzahl des Mantelmaterials gegenüber reinem Quarzglas allein durch die Fluor-Dotierung um 0,6% verringert und durch die zusätzliche Dotierung mit Germaniumdioxid (GeO₂) um 0,2% erhöht ist, so daß die Brechzahl des Mantelmaterials insgesamt um 0,4% geringer ist als diejenige des Kernmaterials.

2. Lichtwellenleiter nach Anspruch 1, **dadurch gekennzeichnet,**
**daß** die Dotierung des Kern- und/oder Mantelmaterials so gewählt ist, daß die Brechzahldifferenz zwischen Kern- und Mantelmaterial gegenüber einem herkömmlichen Lichtwellenleiter (1) nicht verändert ist.

3. Lichtwellenleiter nach Anspruch 1, **dadurch gekennzeichnet,**
**daß** der Lichtwellenleiter (1) ein Standard-Einmoden-Lichtwellenleiter ist

4. Lichtwellenleiter nach Anspruch 1, **dadurch gekennzeichnet,**
**daß** der Lichtwellenleiter (1) ein dispersionsverschobener Einmoden-Lichtwellenleiter ist.

5. Lichtwellenleiter nach Anspruch 1, **dadurch gekennzeichnet,**
**daß** der Lichtwellenleiter ein Multimode-Lichtwellenleiter ist

6. Lichtwellenleiter nach Anspruch 5, **dadurch gekennzeichnet,**
**daß** der Lichtwellenleiter ein Multimode-Stufenindex-Lichtwellenleiter ist.

7. Lichtwellenleiter nach Anspruch 1, **dadurch gekennzeichnet,**
**daß** nur das Mantelmaterial dotiert ist.

8. Lichtwellenleiter nach Anspruch 1, **dadurch gekennzeichnet,**
**daß** die durch eine Dotierung mit dem ersten Fremdstoff hervorgerufene Änderung der Brechzahl zu der durch eine Dotierung mit dem zweiten Fremdstoff hervorgerufenen Änderung der Brechzahl gegenläufig ist.

9. Lichtwellenleiter nach Anspruch 1 oder 8, **dadurch gekennzeichnet,**
**daß** die durch eine Dotierung mit dem ersten Fremdstoff hervorgerufene Änderung des linearen thermischen Ausdehnungskoeffizienten zu der durch eine Dotierung mit dem zweiten Fremdstoff hervorgerufenen Änderung des linearen thermischen Ausdehnungskoeffizienten gegenläufig ist

10. Verfahren zur Herstellung eines Lichtwellenleiters mit einem Kern und einem Mantel jeweils aus Quarzglas unter Abkühlen und Ziehen einer Faser aus einer Schmelze, **dadurch gekennzeichnet, daß**
a) die Differenz der linearen thermischen Ausdehnungskoeffizienten von Kern- und Mantelmaterial mittels entsprechender Dotierung des Kern- und/oder Mantelmaterials durch mindestens einen Fremdstoff so gewählt ist, daß die durch das Abkühlen und/oder Ziehen und/oder sonstigen durch den Herstellungsprozeß im Lichtwellenleiter (1) hervorgerufenen inneren mechanischen Spannungen verringert sind,
b) das Kern- und/oder Mantelmaterial mittels mindestens einem ersten und einem zweiten Fremdstoff so dotiert ist/sind, daß das durch eine Dotierung mit dem ersten Fremdstoff hervorgerufene Verhältnis der Änderung der Brechzahl zur Änderung des linearen thermischen Ausdehnungskoeffizienten, von dem durch eine Dotierung mit dem zweiten Fremdstoff hervorgerufenen Verhältnis der Änderung der Brechzahl zur Änderung des linearen thermischen Ausdehnungskoeffizienten verschieden ist,
c) als Dotierstoffe für das Mantelmaterial Fluor und GeO₂ verwendet werden, und
d) als Dotierstoffe für das Mantelmaterial Fluor und GeO₂ in solchen Konzentrationen verwendet werden, daß zum Zwecke des Erreichens einer Brechzahldifferenz zwischen Kern- und Mantelmaterial von 0,4% bei gleichen linearen thermischen Ausdehnungskoeffinzienten für Kern- und Mantelmaterial die Brechzahl des Mantelmaterials gegenüber reinem Quarzglas allein durch die Fluor-Dotierung um 0,6% verringert und durch die zusätzliche Dotierung mit Germaniumdioxid (GeO₂) um 0,2% erhöht ist, so daß die Brechzahl des Mantelmaterials insgesamt um 0,4% geringer ist als diejenige des Kernmaterials.

11. Verfahren zur Herstellung eines Lichtwellenleiters nach Anspruch 10, **dadurch gekennzeichnet,**
**daß** die linearen thermischen Ausdehnungskoeffizienten von Kern- und Mantelmaterial gleich groß sind.

12. Verfahren zur Herstellung eines Uchtwellenleiters nach Anspruch 10, **dadurch gekennzeichnet,**
**daß** nur das Mantelmaterial dotiert ist.

13. Verfahren zur Herstellung eines lichtwellenleiters nach Anspruch 10,**dadurch gekennzeichnet,**
**daß** die durch eine Dotierung mit dem ersten Fremdstoff hervorgerufene Änderung der Brechzahl zu der durch eine Dotierung mit dem zweiten Fremdstoff hervorgerufenen Änderung der Brechzahl gegenläufig ist.

14. Verfahren zur Herstellung eines Lichtwellenleiters nach Anspruch 10 oder 13,
**dadurch gekennzeichnet,**
**daß** die durch eine Dotierung mit dem ersten Fremdstoff hervorgerufene Änderung des linearen thermischen Ausdehnungskoeffizienten zu der durch eine Dotierung mit dem zweiten Fremdstoff hervorgerufenen Änderung des linearen thermischen Ausdehnungskoeffizienten gegenläufig ist

## Claims

1. Optical fiber having a core of fused quartz and a cladding of fused quartz,
**characterized in that**
a) the difference between the coefficients of linear thermal expansion of the core material and cladding material is chosen by means of appropriate doping of the core material and/or cladding material with at least one impurity such that the internal mechanical stresses produced in the optical fiber (1) by the manufacturing process are reduced,
b) the core material and/or cladding material is/are doped with at least a first and a second impurity such that the ratio of the change in the index of refraction to the change in the coefficient of linear thermal expansion caused by a doping with the first impurity is different from the ratio of the change in the index of refraction to the change in the coefficient of linear thermal expansion caused by a doping with the second impurity,
c) fluorine and GeO₂ are used as dopants for the cladding material, and
d) fluorine and GeO₂ are used as dopants for the cladding material in concentrations such that, in order to achieve a difference in refractive index between the core material and cladding material of 0.4% with equal coefficients of linear thermal expansion for the core material and cladding material, the refractive index of the cladding material is reduced by 0.6% as compared to pure fused quartz by the fluorine doping alone, and is increased by 0.2% by the additional germanium dioxide (GeO₂) doping, so that the refractive index of the cladding material is 0.4% lower overall than that of the core material.

2. Optical fiber according to claim 1, **characterized in that** the doping of the core material and/or cladding material is chosen such that the difference in refractive index between the core material and the cladding material is not changed in comparison to a conventional optical fiber (1).

3. Optical fiber according to claim 1, **characterized in that** the optical fiber (1) is a standard single-mode optical fiber.

4. Optical fiber according to claim 1, **characterized in that** the optical fiber (1) is a dispersion-shifted single-mode optical fiber.

5. Optical fiber according to claim 1, **characterized in that** the optical fiber is a multimode optical fiber.

6. Optical fiber according to claim 5, **characterized in that** the optical fiber is a multimode step index optical fiber.

7. Optical fiber according to claim 1, **characterized in that** only the cladding material is doped.

8. Optical fiber according to claim 1, **characterized in that** the change in the refractive index caused by a doping with the first impurity is opposite to the change in the refractive index caused by a doping with the second impurity.

9. Optical fiber according to claim 1 or claim 8, **characterized in that** the change in the coefficient of linear thermal expansion caused by a doping with the first impurity is opposite to the change in the coefficient of linear thermal expansion caused by a doping with the second impurity.

10. Method for manufacturing an optical fiber having a core of fused quartz and a cladding of fused quartz by cooling and drawing a fiber from a melt, **characterized in that**
a) the difference between the coefficients of linear thermal expansion of the core material and cladding material is chosen by means of appropriate doping of the core material and/or cladding material with at least one impurity such that the internal mechanical stresses produced in the optical fiber (1) by the cooling and/or drawing and/or otherwise in the manufacturing process are reduced,
b) the core material and/or cladding material is/are doped with at least a first and a second impurity such that the ratio of the change in the index of refraction to the change in the coefficient of linear thermal expansion caused by a doping with the first impurity is different from the ratio of the change in the index of refraction to the change in the coefficient of linear thermal expansion caused by a doping with the second impurity,
c) fluorine and GeO₂ are used as dopants for the cladding material, and
d) fluorine and GeO₂ are used as dopants for the cladding material in concentrations such that, in order to achieve a difference in refractive index between the core material and cladding material of 0.4% with equal coefficients of linear thermal expansion for the core material and cladding material, the refractive index of the cladding material is reduced by 0.6% as compared to pure fused quartz by the fluorine doping alone, and is increased by 0.2% by the additional germanium dioxide (GeO₂) doping, so that the refractive index of the cladding material is 0.4% lower overall than that of the core material.

11. Method for manufacturing an optical fiber according to claim 10, **characterized in that** the coefficients of linear thermal expansion of the core material and cladding material are equal.

12. Method for manufacturing an optical fiber according to claim 10, **characterized in that** only the cladding material is doped.

13. Method for manufacturing an optical fiber according to claim 10, **characterized in that** the change in the refractive index caused by a doping with the first impurity is opposite to the change in the refractive index caused by a doping with the second impurity.

14. Method for manufacturing an optical fiber according to claim 10 or claim 13, **characterized in that** the change in the coefficient of linear thermal expansion caused by a doping with the first impurity is opposite to the change in the coefficient of linear thermal expansion caused by a doping with the second impurity.

## Revendications

1. Guide d'ondes optiques comportant un coeur et une gaine respectivement en verre de quartz, **caractérise en ce que**
a) la différence entre les coefficients de dilatation thermique linéique du matériau de coeur et du matériau de gaine est choisie moyennant dopage du matériau de coeur et/ou du matériau de gaine par au moins une matière étrangère de manière telle que les contraintes mécaniques internes engendrées dans le guide d'ondes optiques (1) au cours du processus de fabrication soient réduites,
b) le matériau de coeur et/ou le matériau de gaine est/sont dopé(s) par au moins une première et une deuxième matière étrangère de manière telle que le rapport du changement de l'indice de réfraction, engendrée par un dopage par la première matière étrangère pour modifier le coefficient de dilatation thermique linéique, diffère du rapport du changement de l'indice de réfraction, engendrée par le dopage par la deuxième matière étrangère pour modifier le coefficient de dilatation thermique linéique,
c) qu'on utilise, comme produits dopants pour le matériau de gaine, du fluor et du GeO₂ et
d) qu'on utilise, comme produits dopants pour le matériau de gaine, du fluor et du GeO₂ dans des concentrations telles que pour obtenir une différence de l'indice de réfraction de 0,4 % entre le matériau de coeur et le matériau de gaine, à coefficients de dilatation thermique linéique du matériau de coeur et du matériau de gaine égaux, l'indice de réfraction du matériau de gaine, par rapport à celui du verre de quartz pur, est réduit de 0,6 % par le seul dopage au fluor et augmenté de 0,2 % par le dopage supplémentaire au dioxyde de germanium (GeO₂), de manière que l'indice de réfraction du matériau de gaine soit de 0,4% inférieur à celui du matériau de coeur.

2. Guide d'ondes optiques selon la revendication 1, **caractérisé en ce que** le dopage du matériau de coeur et/ou du matériau de gaine est choisi de manière telle que la différence de l'indice de réfraction entre le matériau de coeur et le matériau de gaine soit inchangée par rapport à celui d'un guide d'ondes optiques (1) conventionnel.

3. Guide d'ondes optiques selon la revendication 1, **caractérisé en ce que** le guide d'ondes optiques (1) est un guide d'ondes optiques monomode standard.

4. Guide d'ondes optiques selon la revendication 1, **caractérisé en ce que** le guide d'ondes optiques (1) est un guide d'ondes optiques monomode à dispersion décalée.

5. Guide d'ondes optiques selon la revendication 1, **caractérisé en ce que** le guide d'ondes optiques est un guide d'ondes optiques multimode.

6. Guide d'ondes optiques selon la revendication 5, **caractérisé en ce que** le guide d'ondes optiques est un guide d'ondes optiques multimode à saut d'indice.

7. Guide d'ondes optiques selon la revendication 1, **caractérisé en ce que** seul le matériau de gaine est dopé.

8. Guide d'ondes optiques selon la revendication 1, **caractérisé en ce que** le changement de l'indice de réfraction engendré par un dopage par la première matière étrangère est opposé au changement de l'indice de réfraction engendré par le dopage par la deuxième matière étrangère.

9. Guide d'ondes optiques selon la revendication 1 ou 8, **caractérisé en ce que** le changement du coefficient de dilatation thermique linéique engendré par un dopage par la première matière étrangère est opposé au changement du coefficient de dilatation thermique linéique engendré par un dopage par la deuxième matière étrangère.

10. Procédé destiné à fabriquer un guide d'ondes optiques comportant un coeur et une gaine respectivement en verre de quartz sous refroidissement et étirage d'une fibre à partir d'un matériau en fusion, **caractérisé en ce que**
a) la différence entre les coefficients de dilatation thermique linéique du matériau de coeur et du matériau de gaine est choisie moyennant dopage par au moins une matière étrangère du matériau de coeur et/ou du matériau de gaine de manière telle que les contraintes mécaniques internes engendrées dans le guide d'ondes optiques au cours du processus de fabrication soient réduites,
b) le matériau de coeur et/ou le matériau de gaine est/sont dopé(s) par au moins une première et une deuxième matière étrangère de manière telle que le rapport du changement de l'indice de réfraction, engendrée par un dopage par la première matière étrangère pour modifier le coefficient de dilatation thermique linéique, diffère du rapport du changement de l'indice de réfraction, engendrée par le dopage par la deuxième matière étrangère pour modifier le coefficient de dilatation thermique linéique,
c) on utilise, comme produits dopants pour le matériau de gaine, du fluor et du GeO₂ et
d) on utilise, comme produits dopants pour le matériau de gaine, du fluor et du GeO₂ dans des concentrations telles que pour obtenir une différence de l'indice de réfraction de 0,4 % entre le matériau de coeur et le matériau de gaine, à coefficients de dilatation thermique linéique du matériau de coeur et du matériau de gaine égaux, l'indice de réfraction du matériau de gaine, par rapport à celui du verre de quartz pur, est réduit de 0,6 % par le seul dopage au fluor et augmenté de 0,2 % par le dopage supplémentaire au dioxyde de germanium (GeO₂), de manière que l'indice de réfraction du matériau de gaine soit de 0,4% inférieur à celui du matériau de coeur.

11. Procédé de fabrication d'un guide d'ondes optiques selon la revendication 10, **caractérise en ce que**
les coefficients de dilatation thermique linéique du matériau de coeur et du matériau de gaine sont égaux.

12. Procédé destiné à fabriquer un guide d'ondes optiques selon la revendication 10, **caractérise en ce que**
seul le matériau de gaine est dopé.

13. Procédé destiné à fabriquer un guide d'ondes optiques selon la revendication 10, **caractérisé en ce que**
le changement de l'indice de réfraction engendré par un dopage par la première matière étrangère est opposé au changement de l'indice de réfraction engendré par un dopage par la deuxième matière étrangère.

14. Procédé de fabrication d'un guide d'ondes optiques selon la revendication 10 ou 13, **caractérisé en ce que**
le changement du coefficient de dilatation thermique linéique engendré par un dopage par la première matière étrangère est opposé au changement du coefficient de dilatation thermique linéique engendré par un dopage par la deuxième matière étrangère.
